# EUROPÄISCHE PATENTANMELDUNG

(11) **EP 3 565 086 A1**
(43) Veröffentlichungstag der Anmeldung: **06.11.2019**
(21) Anmeldenummer: 19171835.2
(22) Anmeldetag: 30.04.2019
(51) Int. Cl.: H02J 7/35, H02J 7/00

(54) **AUTONOMES DRAHTLOSES SENSORGERÄT**

(30) Priorität: 04.05.2018 DE 102018110786
(71) Anmelder: ABB Schweiz AG, 5400 Baden (CH)
(72) Erfinder: Ahrend, Ulf, 76185 Karlsruhe (DE); Decker, Andreas, 64293 Darmstadt (DE); Gebhardt, Jörg, 55130 Mainz (DE); Sosale, Guruprasad, 69469 Weinheim (DE); Kaul, Holger, 68165 Mannheim (DE); Mendoza, Francisco, 69198 Schriesheim (DE); Rodenbusch-Mohr, Thomas, 68161 Mannheim (DE); Beniston, John, 69231 Rauenberg (DE)
(74) Vertreter: Marks, Frank

(57) **Zusammenfassung**

Die Erfindung betrifft ein autonomes drahtloses Sensorgerät (1), welches aufweist:- eine Energiequelle (2),- eine mit der Energiequelle verbundene, mehrere Gleichspannungswandler (3a, 3b, 3c) aufweisende Gleichspannungswandlerbaugruppe (3) und- mehrere mit der Gleichspannungswandlerbaugruppe (3) verbundene Energiesenken (4a, 4b, 4c), wobei jede der Energiesenken an den Ausgang eines der Gleichspannungswandler angeschlossen ist.

## Beschreibung

### Technisches Gebiet der Erfindung

Die Erfindung betrifft ein autonomes drahtloses Sensorgerät.

### Stand der Technik

Autonome drahtlose Sensorgeräte sind bereits bekannt. Sie weisen eine Energiequelle und Energiesenken auf. Bei dieser Energiequelle handelt es sich um eine Primärbatterie oder um einen Energiesammler. Energiesammler werden auch als Harvester bezeichnet. Zu diesen Harvestern gehören beispielsweise Photovoltaik-Harvester, Thermo-Harvester und induktive Harvester. Harvester-Energiequellen sind in den meisten Fällen über einen Powermanager und einen wiederaufladbaren Energiespeicher mit den Energiesenken des jeweiligen Sensorgerätes verbunden. Dieser Powermanager ist unter anderem dazu vorgesehen, eine Impedanzanpassung durchzuführen und eine Spannungsumsetzung vorzunehmen. Der Leistungsverbrauch eines derartigen autonomen drahtlosen Sensorgerätes kann aufgeteilt werden in aktive Leistung, die vom drahtlosen Sensorgerät benötigt wird, und Verlustleistung, die dann verbraucht wird, wenn das drahtlose Sensorgerät heruntergefahren ist und auf ein Ereignis wartet.

### Zusammenfassung der Erfindung

Die Aufgabe der Erfindung besteht darin, ein autonomes drahtloses Sensorgerät anzugeben, dessen Verlustleistung minimiert ist.

Diese Aufgabe wird durch ein autonomes drahtloses Sensorgerät mit den im Anspruch 1 angegebenen Merkmalen gelöst.

Ein erfindungsgemäßes drahtloses Sensorgerät weist eine Energiequelle, eine mit der Energiequelle verbundene, mehrere Gleispannungswandler aufweisende Gleichspannungswandlerbaugruppe und mehrere mit der Gleichspannungswandlerbaugruppe verbundene Energiesenken auf, wobei jede Energiesenke an den Ausgang eines der Gleichspannungswandler angeschlossen ist.

Ein Vorteil eines derartigen Sensorgerätes besteht darin, dass jede der Energiesenken mit einer Versorgungsgleichspannung versorgt werden kann, bei der es sich um die zum Betreiben der jeweiligen Energiesenke minimal notwendige Versorgungsgleichspannung handelt. Da die Verlustleistung des Sensorgerätes unter anderem von der Höhe der Versorgungsgleichspannungen abhängt, die den Energiesenken zur Verfügung gestellt werden, wird die Verlustleistung des Sensorgerätes niedrig gehalten, wenn den Energiesenken des Sensorgerätes keine höhere Versorgungsgleichspannung zur Verfügung gestellt wird, als es zu deren Betrieb notwendig ist.

Ein weiterer Vorteil der Erfindung besteht darin, dass durch die Reduktion des Leistungsverbrauchs die Gesamtkosten des autonomen drahtlosen Sensorgerätes reduziert sind, da das Sensorgerät mit einer kleineren Energiequelle, insbesondere einer kleineren Primärbatterie oder einem kleinerem Energiesammler, ausgestattet sein kann.

Gemäß einer Ausführungsform der Erfindung weist die Gleichspannungswandlerbaugruppe zwei oder mehr in Reihe geschaltete Gleichspannungswandler auf. Von jedem der Ausgänge dieser Gleichspannungswandler kann eine Versorgungsgleichspannung für eine oder mehrere Energiesenken abgegriffen werden.

Gemäß einer Ausführungsform der Erfindung weist die Gleichspannungswandlerbaugruppe zwei oder mehr parallel zueinander geschaltete Gleichspannungswandler auf. Von jedem der Ausgänge dieser Gleichspannungswandler kann eine Versorgungsgleichspannung für eine oder mehrere Energiesenken abgegriffen werden. Gemäß einer Ausführungsform der Erfindung gehören zu den Energiesenken Sensoren, Datenspeicher und/oder Messschaltungen des autonomen drahtlosen Sensorgerätes. Derartige Energiesenken benötigen in der Regel unterschiedliche minimale Versorgungsgleichspannungen, um betriebsfähig zu sein. Mittels der Erfindung kann jedem dieser Bauteile die von ihm benötigte minimale Versorgungsgleichspannung zur Verfügung gestellt werden.

Gemäß einer Ausführungsform der Erfindung kann das Sensorgerät einen Sensor oder mehrere Sensoren oder Kombinationen von Sensoren aus den folgenden Gruppen umfassen: ein Temperatursensor, ein Drucksensor, ein Feuchtigkeitssensor, ein Helligkeitssensor, ein Gassensor, ein Partikelsensor, ein akustischer Sensor, ein Magnetfeldsensor, ein Bewegungsdetektor und/oder mindestens ein mikroelektromechanischer Sensor. Auch unterschiedliche Sensoren benötigen oftmals unterschiedliche minimale Versorgungsgleichspannungen, um betriebsfähig zu sein. Mittels der Erfindung kann jedem dieser Sensoren die von ihm benötigte minimale Versorgungsgleichspannung zur Verfügung gestellt werden.

Gemäß einer Ausführungsform der Erfindung weist die Gleichspannungswandlerbaugruppe mindestens einen Aufwärtswandler und/oder mindestens einen Abwärtswandler und/oder mindestens einen Längsregler auf. Dies ermöglicht es, den Energiesenken bei Bedarf eine im Vergleich zur Primärspannung höhere oder niedrigere Versorgungsgleichspannung zur Verfügung zu stellen.

Gemäß einer Ausführungsform der Erfindung ist die Energiequelle eine Primärbatterie. Dies ermöglicht eine Einsparung einer Impedanzanpassung, eines zusätzlichen Gleichspannungswandlers und eines wiederaufladbaren Energiespeichers vor der Gleichspannungswandlerbaugruppe.

Gemäß einer Ausführungsform der Erfindung ist die Energiequelle ein Energiesammler. Dies ermöglicht den Betrieb des Sensorgerätes mit einer Laufzeit von mehreren Jahren ohne Wechsel der Primärbatterie. Dies ist insbesondere interessant, wenn das Sensorgerät schwer zugänglich ist und/oder nicht zerstörungsfrei geöffnet werden kann.

Gemäß einer Ausführungsform der Erfindung ist der Energiesammler über Impedanzanpassungsmittel und einen Gleichspannungswandler mit einem wiederaufladbaren Energiespeicher verbunden und die Gleichspannungswandlerbaugruppe ist an den Ausgang des wiederaufladbaren Energiespeichers angeschlossen. Dies erleichtert die Anpassung der vom Energiesammler bereitgestellten Energie an den Energiebedarf der Energiesenken des Sensorgerätes.

Gemäß einer Ausführungsform der Erfindung ist der wiederaufladbare Energiespeicher eine wiederaufladbare Batterie oder er weist einen oder mehrere Kondensatoren auf.

Gemäß einer Ausführungsform der Erfindung liegt der Gesamtenergiebedarf der Energiesenken im Bereich von 10 µW bis 1 mW, so dass die Erfindung vorzugsweise im Niedrigenergiebereich verwendet werden kann.

Gemäß einer Ausführungsform erfolgt eine Verwendung des autonomen drahtlosen Sensorgerätes im Bereich der Gebäudeautomation.

### Kurze Beschreibung der Zeichnungen

Die Figur 1 zeigt eine Blockdarstellung eines ersten Ausführungsbeispiels für ein autonomes drahtloses Sensorgerät gemäß der Erfindung.
Die Figur 2 zeigt eine Blockdarstellung eines zweiten Ausführungsbeispiels für ein autonomes drahtloses Sensorgerät gemäß der Erfindung.
Die Figur 3 zeigt eine Blockdarstellung eines dritten Ausführungsbeispiels für ein autonomes drahtloses Sensorgerät gemäß der Erfindung.
Die Figur 4 zeigt eine Blockdarstellung eines vierten Ausführungsbeispiels für ein autonomes drahtloses Sensorgerät gemäß der Erfindung.
Die Figur 5 zeigt eine Blockdarstellung eines fünften Ausführungsbeispiels für ein autonomes drahtloses Sensorgerät gemäß der Erfindung.
Die Figur 6 zeigt eine Blockdarstellung eines sechsten Ausführungsbeispiels für ein autonomes drahtloses Sensorgerät gemäß der Erfindung.

### Ausführliche Beschreibung der Erfindung anhand der Zeichnungen

Ein autonomes drahtloses Sensorgerät weist mehrere unterschiedliche Bauteile auf, bei denen es sich um Energiesenken handelt. Diese Energiesenken benötigen zu ihrem Betrieb eine Versorgungsgleichspannung, die unter Verwendung einer Energiequelle bereitgestellt wird. Diese Versorgungsgleichspannung liegt üblicherweise in einem Gleichspannungsbereich, welcher von Energiesenke zu Energiesenke unterschiedlich sein kann. Mittels der vorliegenden Erfindung wird erreicht, dass jede dieser Energiesenken mit der von ihr minimal benötigten Versorgungsgleichspannung versorgt wird. Folglich wird zur Gleichspannungsversorgung aller Energiesenken eines autonomen drahtlosen Sensorgerätes nicht mehr Energie bereitgestellt als unbedingt notwendig. Dadurch wird zum einen der vom autonomen drahtlosen Sensorgerät benötigte Gesamtenergiebedarf im Vergleich zu bekannten autonomen drahtlosen Sensorgeräten reduziert. Zum anderen wird die während des Betriebs des autonomen drahtlosen Sensorgerätes entstehende Verlustleistung im Vergleich zu bekannten autonomen drahtlosen Sensorgeräten gering gehalten.

Zu den genannten Energiesenken eines autonomen drahtlosen Sensorgerätes gehören insbesondere verschiedene Sensoren, Datenspeicher und Messschaltungen. Zu den Sensoren gehören beispielsweise ein Temperatursensor, ein Drucksensor, ein Feuchtigkeitssensor, ein Helligkeitssensor, ein Gassensor, ein Partikelsensor, ein akustischer Sensor, ein Magnetfeldsensor, ein Bewegungsdetektor und/oder ein oder mehrere mikroelektromechanische weitere Sensoren.

Ein derartiges Sensorgerät ist vorzugsweise zu einer Verwendung im Bereich der Gebäudeautomation ausgebildet. Bei einem derartigen Sensorgerät handelt es sich um ein Niedrigenergiegerät, dessen gesamter Leistungsbedarf im Bereich von 10 µW bis 1mW liegt.

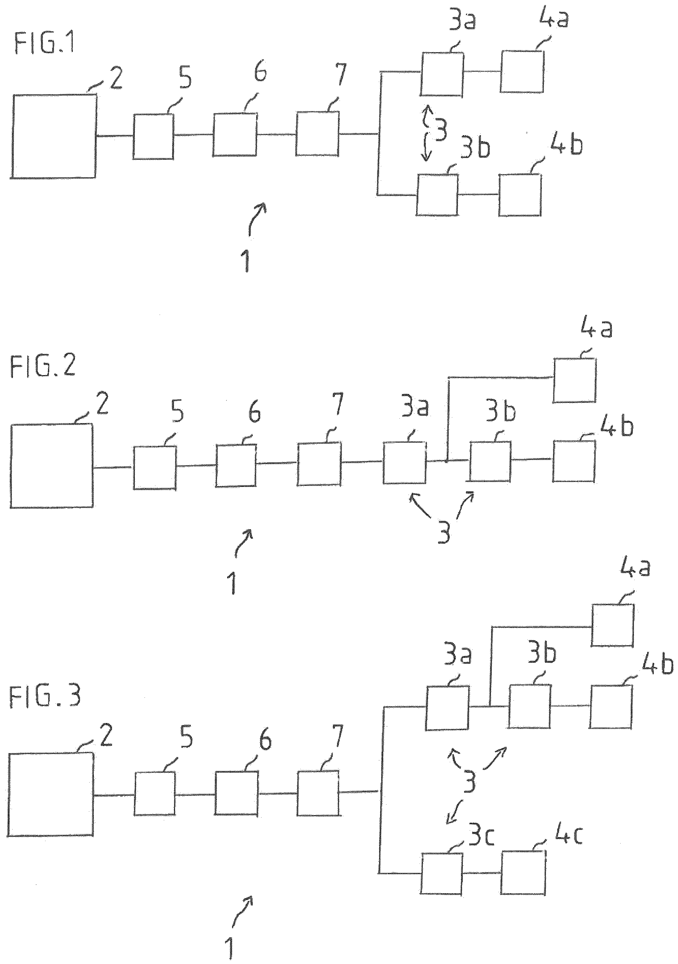

Die Figur 1 zeigt eine Blockdarstellung eines ersten Ausführungsbeispiels für ein autonomes drahtloses Sensorgerät gemäß der Erfindung. Dieses Sensorgerät 1 weist eine Energiequelle 2, eine Gleichspannungswandlerbaugruppe 3 und Energiesenken 4a und 4b auf. Bei der Energiequelle 2 kann es sich um einen Energiesammler, der beispielsweise beim dargestellten Ausführungsbeispiel mindestens eine Photovoltaikzelle aufweist, handeln. Am Ausgang der Energiequelle 2 steht entweder direkt eine Gleichspannung oder eine gleichgerichtete Wechselspannung zur Verfügung. Diese Gleichspannung wird über Impedanzanpassungsmittel 5 und einen ersten Gleichspannungswandler 6 einem wiederaufladbaren Energiespeicher 7 zur Verfügung gestellt und zu dessen Aufladung verwendet. Mittels der Impedanzanpassungsmittel 5 wird eine Anpassung des Innenwiderstandes des Energiesammlers an den Innenwiderstand des ersten Gleichspannungswandlers durchgeführt. Die am Ausgang des ersten Gleichspannungswandlers zur Verfügung gestellte Gleichspannung wird zur Aufladung des wiederaufladbaren Energiespeichers 7 verwendet. Bei diesem wiederaufladbaren Energiespeicher handelt es sich vorzugsweise um eine wiederaufladbare Batterie, beispielsweise eine Lithium-Ionen-Batterie, oder um einen Kondensatoren, beispielsweise sogenannte Super-Caps, aufweisenden Energiespeicher.

An den Ausgang des wiederaufladbaren Energiespeichers 7 ist eine Gleichspannungswandlerbaugruppe 3 angeschlossen, die beim gezeigten Ausführungsbeispiel zwei parallel zueinander angeordnete Gleichspannungswandler 3a und 3b aufweist. Jeder dieser Gleichspannungswandler stellt an seinem Ausgang eine andere Gleichspannung zur Verfügung.

An den Ausgang des Gleichspannungswandlers 3a ist eine Energiesenke 4a angeschlossen, an den Ausgang des Gleichspannungswandlers 3b eine Energiesenke 4b. Die am Ausgang des Gleichspannungswandlers 3a bereitgestellte Gleichspannung entspricht der minimal notwendigen Versorgungsgleichspannung der Energiesenke 4a. Die am Ausgang des Gleichspannungswandlers 3b bereitgestellte Gleichspannung entspricht der minimal notwendigen Versorgungsgleichspannung der Energiesenke 4b.

Die minimal notwendige Versorgungsgleichspannung der Energiesenke 4a ist von der minimal notwendigen Versorgungsgleichspannung der Energiesenke 4b verschieden.

Folglich werden bei dem in der Figur 1 gezeigten Ausführungsbeispiel parallel zueinander vorgesehene Gleichspannungswandler dazu verwendet, eine von einem wiederaufladbaren Energiespeicher 7 bereitgestellte Gleichspannung in mehrere verschiedene Gleichspannungen umzuwandeln, wobei es sich bei diesen verschiedenen Gleichspannungen um von verschiedenen Bauteilen eines Sensorgerätes minimal benötigte Versorgungsgleichspannungen handelt.

Alternativ zu dem in der Figur 1 dargestellten Ausführungsbeispiel können an die Ausgänge der Gleichspannungswandler 3a und 3b auch jeweils mehrere verschiedene Energiesenken angeschlossen sein, deren minimal notwendige Versorgungsgleichspannung mit der vom jeweiligen Gleichspannungswandler bereitgestellten Gleichspannung übereinstimmt.

Eine weitere Alternative zu dem in der Figur 1 dargestellten Ausführungsbeispiel besteht darin, drei oder mehr parallel zueinander angeordnete Gleichspannungswandler vorzusehen, um drei oder mehr verschiedene Gleichspannungen bereitzustellen, die jeweils einer oder mehreren Energiesenken bereitgestellt werden, um diese mit der jeweils benötigten minimalen Versorgungsgleichspannung zu versorgen.

Die Figur 2 zeigt eine Blockdarstellung eines zweiten Ausführungsbeispiels für ein autonomes drahtloses Sensorgerät gemäß der Erfindung. Dieses Sensorgerät 1 weist eine Energiequelle 2, eine Gleichspannungswandlerbaugruppe 3 und Energiesenken 4a und 4b auf. Bei der Energiequelle 2 kann es sich um einen Energiesammler, der beispielsweise beim dargestellten Ausführungsbeispiel mindestens eine Photovoltaikzelle aufweist, handeln. Am Ausgang der Energiequelle 2 steht entweder direkt eine Gleichspannung oder eine gleichgerichtete Wechselspannung zur Verfügung. Diese Gleichspannung wird über Impedanzanpassungsmittel 5 und einen ersten Gleichspannungswandler 6 einem wiederaufladbaren Energiespeicher 7 zur Verfügung gestellt und zu dessen Aufladung verwendet. Mittels der Impedanzanpassungsmittel 5 wird eine Anpassung des Innenwiderstandes des Energiesammlers an den Innenwiderstand des ersten Gleichspannungswandlers durchgeführt. Die am Ausgang des ersten Gleichspannungswandlers zur Verfügung gestellte Gleichspannung wird zur Aufladung des wiederaufladbaren Energiespeichers 7 verwendet. Bei diesem wiederaufladbaren Energiespeicher handelt es sich vorzugsweise um eine wiederaufladbare Batterie, beispielsweise eine Lithium-Ionen-Batterie, oder um einen Kondensatoren, beispielsweise sogenannte Super-Caps, aufweisenden Energiespeicher.

An den Ausgang des wiederaufladbaren Energiespeichers 7 ist eine Gleichspannungswandlerbaugruppe 3 angeschlossen, die beim gezeigten Ausführungsbeispiel zwei in Reihe hintereinander angeordnete Gleichspannungswandler 3a und 3b aufweist. Jeder dieser Gleichspannungswandler stellt an seinem Ausgang eine andere Gleichspannung zur Verfügung, wobei der Gleichspannungswandler 3b die vom Gleichspannungswandler 3a bereitgestellte Gleichspannung als Eingangsspannung verwendet und diese in eine andere Gleichspannung wandelt, die sich von der vom Gleichspannungswandler 3a bereitgestellten Gleichspannung unterscheidet.

An den Ausgang des Gleichspannungswandlers 3a ist eine Energiesenke 4a angeschlossen, an den Ausgang des Gleichspannungswandlers 3b eine Energiesenke 4b. Die am Ausgang des Gleichspannungswandlers 3a bereitgestellte Gleichspannung entspricht der minimal notwendigen Versorgungsgleichspannung der Energiesenke 4a. Die am Ausgang des Gleichspannungswandlers 3b bereitgestellte Gleichspannung entspricht der minimal notwendigen Versorgungsgleichspannung der Energiesenke 4b.

Die minimal notwendige Versorgungsgleichspannung der Energiesenke 4a ist von der minimal notwendigen Versorgungsgleichspannung der Energiesenke 4b verschieden.

Folglich werden bei dem in der Figur 2 gezeigten Ausführungsbeispiel in Reihe hintereinander geschaltete Gleichspannungswandler dazu verwendet, eine von einem wiederaufladbaren Energiespeicher 7 bereitgestellte Gleichspannung in mehrere verschiedene Gleichspannungen umzuwandeln, wobei es sich bei diesen verschiedenen Gleichspannungen um von verschiedenen Bauteilen eines Sensorgerätes minimal benötigte Versorgungsgleichspannungen handelt.

Alternativ zu dem in der Figur 2 dargestellten Ausführungsbeispiel können an die Ausgänge der Gleichspannungswandler 3a und 3b auch jeweils mehrere verschiedene Energiesenken angeschlossen sein, deren minimal notwendige Versorgungsgleichspannung mit der vom jeweiligen Gleichspannungswandler bereitgestellten Gleichspannung übereinstimmt.

Eine weitere Alternative zu dem in der Figur 2 dargestellten Ausführungsbeispiel besteht darin, drei oder mehr in Reihe hintereinander geschaltete Gleichspannungswandler vorzusehen, um drei oder mehr verschiedene Gleichspannungen bereitzustellen, die jeweils einer oder mehreren Energiesenken bereitgestellt werden, um diese mit der jeweils benötigten minimalen Versorgungsgleichspannung zu versorgen.

Die Figur 3 zeigt eine Blockdarstellung eines dritten Ausführungsbeispiels für ein autonomes drahtloses Sensorgerät gemäß der Erfindung. Dieses Sensorgerät 1 weist eine Energiequelle 2, eine Gleichspannungswandlerbaugruppe 3 und Energiesenken 4a, 4b und 4c auf. Bei der Energiequelle 2 kann es sich um einen Energiesammler, der beispielsweise beim dargestellten Ausführungsbeispiel mindestens eine Photovoltaikzelle aufweist, handeln. Am Ausgang der Energiequelle 2 steht entweder direkt eine Gleichspannung oder eine gleichgerichtete Wechselspannung zur Verfügung. Diese Gleichspannung wird über Impedanzanpassungsmittel 5 und einen ersten Gleichspannungswandler 6 einem wiederaufladbaren Energiespeicher 7 zur Verfügung gestellt und zu dessen Aufladung verwendet. Mittels der Impedanzanpassungsmittel 5 wird eine Anpassung des Innenwiderstandes des Energiesammlers an den Innenwiderstand des ersten Gleichspannungswandlers durchgeführt. Die am Ausgang des ersten Gleichspannungswandlers zur Verfügung gestellte Gleichspannung wird zur Aufladung des wiederaufladbaren Energiespeichers 7 verwendet. Bei diesem wiederaufladbaren Energiespeicher handelt es sich vorzugsweise um eine wiederaufladbare Batterie, beispielsweise eine Lithium-Ionen-Batterie, oder um einen Kondensatoren, beispielsweise sogenannte Super-Caps, aufweisenden Energiespeicher.

An den Ausgang des wiederaufladbaren Energiespeichers 7 ist eine Gleichspannungswandlerbaugruppe 3 angeschlossen, die beim gezeigten Ausführungsbeispiel drei Gleichspannungswandler 3a, 3b und 3c aufweist. Jeder dieser Gleichspannungswandler stellt an seinem Ausgang eine andere Gleichspannung zur Verfügung, wobei der Gleichspannungswandler 3b die vom Gleichspannungswandler 3a bereitgestellte Gleichspannung als Eingangsspannung verwendet und diese in eine andere Gleichspannung wandelt, die sich von der vom Gleichspannungswandler 3a bereitgestellten Gleichspannung und auch von der vom Gleichspannungswandler 3c bereitgestellten Gleichspannung unterscheidet.

An den Ausgang des Gleichspannungswandlers 3a ist eine Energiesenke 4a angeschlossen, an den Ausgang des Gleichspannungswandlers 3b eine Energiesenke 4b und an den Ausgang des Gleichspannungswandlers 3c eine Energiesenke 4c. Die am Ausgang des Gleichspannungswandlers 3a bereitgestellte Gleichspannung entspricht der minimal notwendigen Versorgungsgleichspannung der Energiesenke 4a. Die am Ausgang des Gleichspannungswandlers 3b bereitgestellte Gleichspannung entspricht der minimal notwendigen Versorgungsgleichspannung der Energiesenke 4b. Die am Ausgang des Gleichspannungswandlers 3c bereitgestellte Gleichspannung entspricht der minimal notwendigen Versorgungsgleichspannung der Energiesenke 4c.

Die minimal notwendigen Versorgungsgleichspannungen der Energiesenken 4a, 4b und 4c sind voneinander verschieden.

Folglich werden bei dem in der Figur 3 gezeigten Ausführungsbeispiel sowohl in Reihe hintereinander geschaltete Gleichspannungswandler als auch parallel zueinander angeordnete Gleichspannungswandler dazu verwendet, eine von einem wiederaufladbaren Energiespeicher 7 bereitgestellte Gleichspannung in mehrere verschiedene Gleichspannungen umzuwandeln, wobei es sich bei diesen verschiedenen Gleichspannungen um von verschiedenen Bauteilen eines Sensorgerätes minimal benötigte Versorgungsgleichspannungen handelt.

Alternativ zu dem in der Figur 3 dargestellten Ausführungsbeispiel können an die Ausgänge der Gleichspannungswandler 3a, 3b und 3c auch jeweils mehrere verschiedene Energiesenken angeschlossen sein, deren minimal notwendige Versorgungsgleichspannung mit der vom jeweiligen Gleichspannungswandler bereitgestellten Gleichspannung übereinstimmt.

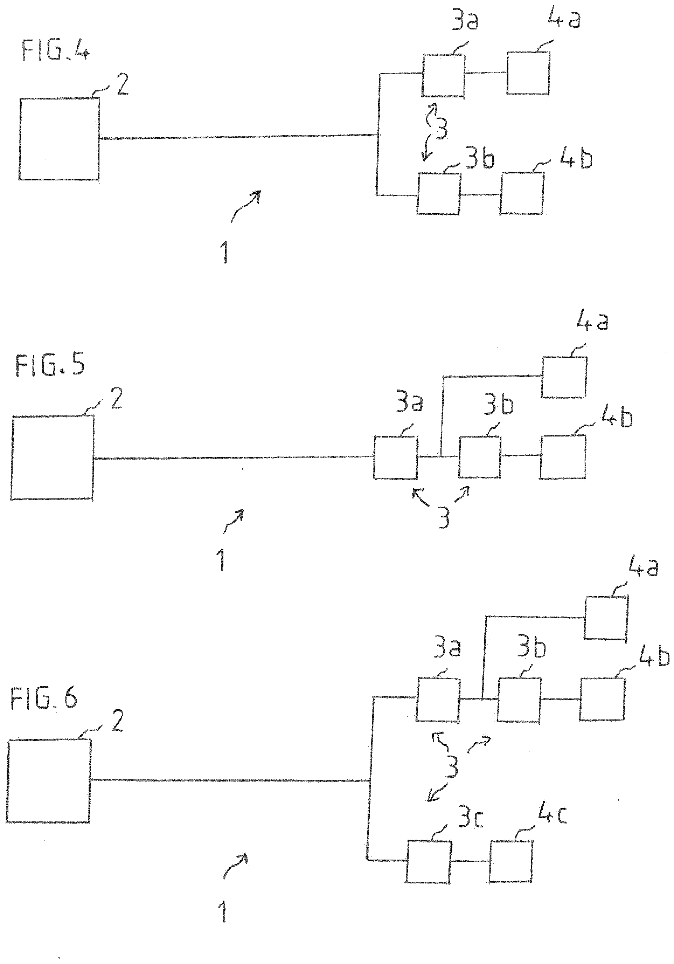

Die Figur 4 zeigt eine Blockdarstellung eines vierten Ausführungsbeispiels für ein autonomes drahtloses Sensorgerät gemäß der Erfindung. Dieses Sensorgerät 1 weist eine Energiequelle 2, eine Gleichspannungswandlerbaugruppe 3 und Energiesenken 4a und 4b auf. Bei der Energiequelle 2 handelt es sich um eine Primärbatterie. Am Ausgang der Energiequelle 2 steht eine Gleichspannung zur Verfügung, die der Gleichspannungswandlerbaugruppe 3 bereitgestellt wird. Diese Gleichspannungswandlerbaugruppe 3 weist beim gezeigten Ausführungsbeispiel zwei parallel zueinander angeordnete Gleichspannungswandler 3a und 3b auf. Jeder dieser Gleichspannungswandler stellt an seinem Ausgang eine andere Gleichspannung zur Verfügung.

An den Ausgang des Gleichspannungswandlers 3a ist eine Energiesenke 4a angeschlossen, an den Ausgang des Gleichspannungswandlers 3b eine Energiesenke 4b. Die am Ausgang des Gleichspannungswandlers 3a bereitgestellte Gleichspannung entspricht der minimal notwendigen Versorgungsgleichspannung der Energiesenke 4a. Die am Ausgang des Gleichspannungswandlers 3b bereitgestellte Gleichspannung entspricht der minimal notwendigen Versorgungsgleichspannung der Energiesenke 4b.

Die minimal notwendige Versorgungsgleichspannung der Energiesenke 4a ist von der minimal notwendigen Versorgungsgleichspannung der Energiesenke 4b verschieden.

Folglich werden bei dem in der Figur 4 gezeigten Ausführungsbeispiel parallel zueinander vorgesehene Gleichspannungswandler dazu verwendet, eine von einer Primärbatterie bereitgestellte Gleichspannung in mehrere verschiedene Gleichspannungen umzuwandeln, wobei es sich bei diesen verschiedenen Gleichspannungen um von verschiedenen Bauteilen eines Sensorgerätes minimal benötigte Versorgungsgleichspannungen handelt.

Alternativ zu dem in der Figur 4 dargestellten Ausführungsbeispiel können an die Ausgänge der Gleichspannungswandler 3a und 3b auch jeweils mehrere verschiedene Energiesenken angeschlossen sein, deren minimal notwendige Versorgungsgleichspannung mit der vom jeweiligen Gleichspannungswandler bereitgestellten Gleichspannung übereinstimmt.

Eine weitere Alternative zu dem in der Figur 4 dargestellten Ausführungsbeispiel besteht darin, drei oder mehr parallel zueinander angeordnete Gleichspannungswandler vorzusehen, um drei oder mehr verschiedene Gleichspannungen bereitzustellen, die jeweils einer oder mehreren Energiesenken bereitgestellt werden, um diese mit der jeweils benötigten minimalen Versorgungsgleichspannung zu versorgen.

Die Figur 5 zeigt eine Blockdarstellung eines fünften Ausführungsbeispiels für ein autonomes drahtloses Sensorgerät gemäß der Erfindung. Dieses Sensorgerät 1 weist eine Energiequelle 2, eine Gleichspannungswandlerbaugruppe 3 und Energiesenken 4a und 4b auf. Bei der Energiequelle 2 handelt es sich um eine Primärbatterie. Am Ausgang der Energiequelle 2 steht eine Gleichspannung zur Verfügung, die einer Gleichspannungswandlerbaugruppe 3 bereitgestellt wird. Diese Gleichspannungswandlerbaugruppe 3 weist beim gezeigten Ausführungsbeispiel zwei in Reihe hintereinander angeordnete Gleichspannungswandler 3a und 3b auf. Jeder dieser Gleichspannungswandler stellt an seinem Ausgang eine andere Gleichspannung zur Verfügung.

An den Ausgang des Gleichspannungswandlers 3a ist eine Energiesenke 4a angeschlossen, an den Ausgang des Gleichspannungswandlers 3b eine Energiesenke 4b. Die am Ausgang des Gleichspannungswandlers 3a bereitgestellte Gleichspannung entspricht der minimal notwendigen Versorgungsgleichspannung der Energiesenke 4a. Die am Ausgang des Gleichspannungswandlers 3b bereitgestellte Gleichspannung entspricht der minimal notwendigen Versorgungsgleichspannung der Energiesenke 4b.

Die minimal notwendige Versorgungsgleichspannung der Energiesenke 4a ist von der minimal notwendigen Versorgungsgleichspannung der Energiesenke 4b verschieden.

Folglich werden bei dem in der Figur 5 gezeigten Ausführungsbeispiel in Reihe hintereinander geschaltete Gleichspannungswandler dazu verwendet, eine von einem wiederaufladbaren Energiespeicher 7 bereitgestellte Gleichspannung in mehrere verschiedene Gleichspannungen umzuwandeln, wobei es sich bei diesen verschiedenen Gleichspannungen um von verschiedenen Bauteilen eines Sensorgerätes minimal benötigte Versorgungsgleichspannungen handelt.

Alternativ zu dem in der Figur 5 dargestellten Ausführungsbeispiel können an die Ausgänge der Gleichspannungswandler 3a und 3b auch jeweils mehrere verschiedene Energiesenken angeschlossen sein, deren minimal notwendige Versorgungsgleichspannung mit der vom jeweiligen Gleichspannungswandler bereitgestellten Gleichspannung übereinstimmt.

Eine weitere Alternative zu dem in der Figur 5 dargestellten Ausführungsbeispiel besteht darin, drei oder mehr in Reihe hintereinander geschaltete Gleichspannungswandler vorzusehen, um drei oder mehr verschiedene Gleichspannungen bereitzustellen, die jeweils einer oder mehreren Energiesenken bereitgestellt werden, um diese mit der jeweils benötigten minimalen Versorgungsgleichspannung zu versorgen.

Die Figur 6 zeigt eine Blockdarstellung eines sechsten Ausführungsbeispiels für ein autonomes drahtloses Sensorgerät gemäß der Erfindung. Dieses Sensorgerät 1 weist eine Energiequelle 2, eine Gleichspannungswandlerbaugruppe 3 und Energiesenken 4a, 4b und 4c auf. Bei der Energiequelle 2 handelt es sich um eine Primärbatterie. Am Ausgang der Energiequelle 2 steht eine Gleichspannung zur Verfügung, die der Gleichspannungswandlerbaugruppe 3 bereitgestellt wird.
Diese Gleichspannungswandlerbaugruppe 3 weist beim gezeigten Ausführungsbeispiel drei Gleichspannungswandler 3a, 3b und 3c auf. Jeder dieser Gleichspannungswandler stellt an seinem Ausgang eine andere Gleichspannung zur Verfügung, wobei der Gleichspannungswandler 3b die vom Gleichspannungswandler 3a bereitgestellte Gleichspannung als Eingangsspannung verwendet und diese in eine andere Gleichspannung wandelt, die sich von der vom Gleichspannungswandler 3a bereitgestellten Gleichspannung und auch von der vom Gleichspannungswandler 3c bereitgestellten Gleichspannung unterscheidet.

An den Ausgang des Gleichspannungswandlers 3a ist eine Energiesenke 4a angeschlossen, an den Ausgang des Gleichspannungswandlers 3b eine Energiesenke 4b und an den Ausgang des Gleichspannungswandlers 3c eine Energiesenke 4c. Die am Ausgang des Gleichspannungswandlers 3a bereitgestellte Gleichspannung entspricht der minimal notwendigen Versorgungsgleichspannung der Energiesenke 4a. Die am Ausgang des Gleichspannungswandlers 3b bereitgestellte Gleichspannung entspricht der minimal notwendigen Versorgungsgleichspannung der Energiesenke 4b. Die am Ausgang des Gleichspannungswandlers 3c bereitgestellte Gleichspannung entspricht der minimal notwendigen Versorgungsgleichspannung der Energiesenke 4c.

Die minimal notwendigen Versorgungsgleichspannungen der Energiesenken 4a, 4b und 4c sind voneinander verschieden.

Folglich werden bei dem in der Figur 6 gezeigten Ausführungsbeispiel sowohl in Reihe hintereinander geschaltete Gleichspannungswandler als auch parallel zueinander angeordnete Gleichspannungswandler dazu verwendet, eine von einer Primärbatterie bereitgestellte Gleichspannung in mehrere verschiedene Gleichspannungen umzuwandeln, wobei es sich bei diesen verschiedenen Gleichspannungen um von verschiedenen Bauteilen eines Sensorgerätes minimal benötigte Versorgungsgleichspannungen handelt.

Alternativ zu dem in der Figur 6 dargestellten Ausführungsbeispiel können an die Ausgänge der Gleichspannungswandler 3a, 3b und 3c auch jeweils mehrere verschiedene Energiesenken angeschlossen sein, deren minimal notwendige Versorgungsgleichspannung mit der vom jeweiligen Gleichspannungswandler bereitgestellten Gleichspannung übereinstimmt.

Bei den oben anhand der Figuren 1 bis 3 beschriebenen Ausführungsbeispielen wurde als Energiequelle jeweils ein Energiesammler beschrieben, welcher Photovoltaikzellen aufweist. Alternativ dazu kann jedoch als Energiesammler jeweils auch ein anderer Typ von Energiesammler verwendet werden, beispielsweise ein sogenannter thermischer Harvester oder ein induktiver Harvester.

Bei den oben beschriebenen Gleichspannungswandlern der Gleichspannungswandlerbaugruppe 3 kann es sich um Aufwärtswandler, Abwärtswandler oder Längsregler oder um eine jeweils geeignete Kombination von Aufwärtswandlern Abwärtswandlern und Längsreglern handeln.

Bei den oben beschriebenen Ausführungsbeispielen wurde entweder eine Primärbatterie oder ein Energiesammler als Energiequelle verwendet. Alternativ dazu ist es auch möglich, als Energiequelle eine Primärbatterie und einen oder mehrere Energiesammler zu verwenden oder als Energiequelle mehrere Energiesammler zu verwenden.

### Bezugszeichenliste:

- 1: Autonomes drahtloses Sensorgerät
- 2: Energiequelle
- 3: Gleichspannungswandlerbaugruppe
- 3a: Gleichspannungswandler
- 3b: Gleichspannungswandler
- 3c: Gleichspannungswandler
- 4a: Energiesenke
- 4b: Energiesenke
- 4c: Energiesenke
- 5: Impedanzanpassungsmittel
- 6: Gleichspannungswandler
- 7: wiederaufladbarer Energiespeicher

## Patentansprüche

1. Autonomes drahtloses Sensorgerät (1), welches aufweist:
- eine Energiequelle (2),
- eine mit der Energiequelle verbundene, mehrere Gleichspannungswandler (3a, 3b, 3c) aufweisende Gleichspannungswandlerbaugruppe (3) und
- mehrere mit der Gleichspannungswandlerbaugruppe (3) verbundene Energiesenken (4a, 4b, 4c), wobei jede der Energiesenken an den Ausgang eines der Gleichspannungswandler angeschlossen ist.

2. Autonomes drahtloses Sensorgerät nach Anspruch 1, bei welchem die Gleichspannungswandlerbaugruppe (3) zwei oder mehr in Reihe geschaltete Gleichspannungswandler aufweist.

3. Autonomes drahtloses Sensorgerät nach Anspruch 1 oder 2, bei welchem die Gleichspannungswandlerbaugruppe (3) zwei oder mehr parallel zueinander geschaltete Gleichspannungswandler aufweist.

4. Autonomes drahtloses Sensorgerät nach einem der vorhergehenden Ansprüche, bei welchem zu den Energiesenken Sensoren, Datenspeicher und/oder Messschaltungen gehören.

5. Autonomes drahtloses Sensorgerät nach Anspruch 4, das einen Sensor oder mehrere Sensoren oder Kombinationen von Sensoren aus folgenden Gruppen umfasst: ein Temperatursensor, ein Drucksensor, ein Feuchtigkeitssensor, ein Helligkeitssensor, ein Gassensor, ein Partikelsensor, ein akustischer Sensor, ein Magnetfeldsensor, ein Bewegungsdetektor und/oder ein oder mehrere mikroelektromechanische Sensoren.

6. Autonomes drahtloses Sensorgerät nach einem der vorhergehenden Ansprüche, bei welchem die Gleichspannungswandlerbaugruppe (3) mindestens einen Aufwärtswandler und/oder mindestens einen Abwärtswandler und/oder mindestens einen Längsregler aufweist.

7. Autonomes drahtloses Sensorgerät nach einem der vorhergehenden Ansprüche, bei welchem die Energiequelle (2) eine Primärbatterie aufweist.

8. Autonomes drahtloses Sensorgerät nach einem der Ansprüche 1-7, bei welchem die Energiequelle (2) einen oder mehrere Energiesammler aufweist.

9. Autonomes drahtloses Sensorgerät nach Anspruch 8, bei welchem der Energiesammler über Impedanzanpassungsmittel (5) und einen Gleichspannungswandler (6) mit einem wiederaufladbaren Energiespeicher (7) verbunden ist und die Gleichspannungswandlerbaugruppe (3) an den Ausgang des wiederaufladbaren Energiespeichers angeschlossen ist.

10. Autonomes drahtloses Sensorgerät nach Anspruch 9, bei welchem der wiederaufladbare Energiespeicher (7) eine wiederaufladbare Batterie ist oder einen oder mehrere Kondensatoren aufweist.

11. Autonomes drahtloses Sensorgerät nach einem der vorhergehenden Ansprüche, bei welchem der Gesamtenergiebedarf der Energiesenken im Bereich von 10 µW bis 1 mW liegt.

12. Verwendung eines autonomen drahtlosen Sensorgerätes nach einem der vorhergehenden Ansprüche im Bereich der Gebäudeautomation.
